(19) Europäisches Patentamt / European Patent Office / Office européen des brevets

(11) **EP 4 195 792 B1**

(12) **EUROPEAN PATENT SPECIFICATION**

(45) Date of publication and mention
of the grant of the patent:
**01.10.2025 Bulletin 2025/40**

(21) Application number: **20948561.4**

(22) Date of filing: **07.08.2020**

(51) International Patent Classification (IPC):
*H04W 52/42* (2009.01)     *H04W 52/54* (2009.01)
*H04W 52/14* (2009.01)     *H04W 52/32* (2009.01)
*H04W 52/24* (2009.01)

(52) Cooperative Patent Classification (CPC):
**H04W 52/54; H04W 52/42;** H04W 52/146;
H04W 52/248; H04W 52/325

(86) International application number:
**PCT/JP2020/030413**

(87) International publication number:
**WO 2022/030003 (10.02.2022 Gazette 2022/06)**

(54) **TERMINAL, RADIO COMMUNICATION METHOD AND BASE STATION**

ENDGERÄT, FUNKKOMMUNIKATIONSVERFAHREN UND BASISSTATION

TERMINAL, PROCÉDÉ DE COMMUNICATION RADIO ET STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023 Bulletin 2023/24**

(73) Proprietor: **NTT DOCOMO, INC.**
**Chiyoda-ku**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**
• **SUN, Weiqi**
  **Beijing 100190 (CN)**
• **WANG, Jing**
  **Beijing 100190 (CN)**
• **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(56) References cited:
**WO-A1-2019/244221     WO-A1-2020/017059**

• **ZTE ET AL: "Remaining details on NR power
control in non-CA aspects", vol. RAN WG1, no.
Vancouver, Canada; 20180122 - 20180126, 13
January 2018 (2018-01-13), XP051384613,
Retrieved from the Internet <URL:http://
www.3gpp.org/ftp/tsg%5Fran/WG1%5FRL1/
TSGR1%5FAH/NR%5FAH%5F1801/Docs/>
[retrieved on 20180113]**
• **"3rd Generation Partnership Project; Technical
Specification Group Radio Access Network; NR;
Multiplexing and channel coding (Release 16)",
vol. RAN WG1, no. V16.2.0, 20 July 2020
(2020-07-20), pages 1 - 151, XP051925547,
Retrieved from the Internet <URL:ftp://
ftp.3gpp.org/Specs/archive/38_series/38.212/
38212-g20.zip 38212-g20.docx> [retrieved on
20200720]**

- **LENOVO, MOTOROLA MOBILITY: "Remaining issues on multi-TRP/panel transmission", 3GPP DRAFT; R1-2001971, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Online Meeting ;20200420 - 20200430, 10 April 2020 (2020-04-10), Mobile Competence Centre ; 650, route des Lucioles ; F-06921 Sophia-Antipolis Cedex ; France , XP051873389**

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

ZTE ET AL: "Remaining details on NR power control in non-CA aspects",3GPP DRAFT; R1-1800118 TPs on NR power control for related issues to the NR specifications for non-CA aspects.

"3rd Generation Partnership Project; Technical Specification Group Radio Access Network; NR; Multiplexing and channel coding (Release 16)" relates to technical specifications for 3GPPTS 38.212, in particular relating to multiplexing and channel coding.

Summary of Invention

Technical Problem

In Rel-15 NR, a user terminal (User Equipment (UE)) may be configured with spatial relation information (also referred to as SRI) regarding a Physical Uplink Control Channel(PUCCH). In Rel-15 NR, single PUCCH SRI is controlled to be activated for one PUCCH resource at a certain time.

For NR, a study is underway that the UE repeatedly transmits a PUCCH to a plurality of transmission/reception points to improve reliability of the PUCCH. Repetitive transmission of the PUCCH may be referred to as PUCCH repetition.

However, in accordance with the previous NR specifications, different SRI cannot be applied in the PUCCH repetition, and thus, a received quality of the PUCCH cannot be efficiently improved. In this case, for example, a spatial diversity gain, a high rank transmission, or the like in a case that a plurality of transmission/reception points are used cannot be preferably achieved, and thus, increase in communication throughput may be suppressed.

As such, an object of the present disclosure is to provide a terminal, a radio communication method, and a base station capable of achieving a preferable PUCCH repetitive transmission.

Solution to Problem

The object of the invention is achieved by the subject-matter of the independent claims. Advantageous embodiments are defined in the dependent claims. Further examples are provided for facilitating the understanding of the invention.

A terminal according to an aspect of the present disclosure includes a receiving section that receives single downlink control information (DCI) for a plurality of physical uplink control channels (PUCCHs), and a control section that controls transmission of the PUCCHs based on an extended transmit power control (TPC) command field included in the DCI and spatial relation information (SRI) corresponding to an index associated with the TPC.

Advantageous Effects of Invention

According to an aspect of the present disclosure, a preferable PUCCH repetitive transmission can be achieved.

Brief Description of Drawings

[FIG. 1] FIGS. 1A and 1B are diagrams to show examples of a correspondence between an extended TPC command field and a closed loop index;
[FIG. 2] FIGS. 2A and 2B are diagrams to show other examples of the correspondence between the extended TPC command field and the closed loop index;
[FIG. 3] FIGS. 3A and 3B are diagrams to show examples of a correspondence between the extended TPC command field and spatial relation information (SRI);
[FIG. 4] FIG. 4 is a diagram to show an example of a schematic structure of a radio communication system according to one embodiment;
[FIG. 5] FIG. 5 is a diagram to show an example of a structure of a base station according to one embodiment;
[FIG. 6] FIG. 6 is a diagram to show an example of a structure of a user terminal according to one embodiment; and
[FIG. 7] FIG. 7 is a diagram to show an example of a hardware structure of the base station and the user terminal according to one embodiment.

Description of Embodiments

(Spatial Relation Information)

In NR, a UE controls transmission processing (for example, at least one of transmission, mapping, precoding, modulation, and coding) of at least one of uplink signal and uplink channel (also expressed as signal/channel) based on a given spatial relation.

The spatial relation applied to a given signal/channel may be specified by spatial relation information (SRI) notified (configured) through higher layer signaling.

Note that, in the present disclosure, the higher layer signaling may be any one or combinations of, for example, RRC (Radio Resource Control) signaling, MAC (Medium Access Control) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

For example, in Rel-15 NR, the UE may be configured with spatial relation information (a "PUCCH-SpatialRelationInfo" information element of the RRC) between a given reference signal (RS) and an uplink control channel (Physical Uplink Control Channel (PUCCH)), the spatial relation information being included in PUCCH configuration information (a "PUCCH-Config" information element of the

RRC).

The given RS may be at least one of a synchronization signal block (SSB), a channel state information-reference signal (CSI-RS), and a reference signal for measurement (Sounding Reference Signal (SRS)).

The configured SRI may include an SRI Identifier (ID) for identifying the SRI. The SRI may include, as an index of the given RS described above, at least one of an SSB index, a CSI-RS resource ID, and an SRS resource ID. The spatial relation information may include a serving cell index, a bandwidth part (BWP) ID, and the like corresponding to the given RS described above.

In a case that the UE is configured with the spatial relation information regarding the SSB or the CSI-RS and the PUCCH, the UE may use a spatial domain filter the same as a spatial domain filter for receiving the SSB or the CSI-RS to transmit the PUCCH. Specifically, in this case, the UE may assume that a UE receive beam for the SSB or the CSI-RS is the same as a UE transmit beam for the PUCCH.

In a case that the UE is configured with the spatial relation information regarding the SRS and the PUCCH, the UE may use a spatial domain filter the same as a spatial domain filter for transmitting the SRS to transmit the PUCCH. Specifically, in this case, the UE may assume that a UE transmit beam for the SRS is the same as a UE transmit beam for the PUCCH.

Note that a spatial domain filter for base station transmission, a downlink spatial domain transmission filter, and a base station transmit beam may be interchangeably interpreted. A spatial domain filter for base station reception, an uplink spatial domain receive filter, and a base station receive beam may be interchangeably interpreted.

A spatial domain filter for UE transmission, an uplink spatial domain transmission filter, and a UE transmit beam may be interchangeably interpreted. A spatial domain filter for UE reception, a downlink spatial domain receive filter, and a UE receive beam may be interchangeably interpreted.

The UE may be configured with the SRI in units of PUCCH configuration (PUCCH-Config). The SRI configured by the PUCCH configuration may be applied to all PUCCH resources configured by the PUCCH configuration.

In a case that the UE is configured with multiple SRI regarding the PUCCH, the UE may perform control such that single PUCCH SRI is activated for one PUCCH resource at a certain time based on a PUCCH spatial relation activation/deactivation MAC CE.

(Transmit Power Control for PUCCH)

In NR, a PUCCH transmit power is controlled based on a TPC command (also referred to as a value, increase/decrease value, correction value, indicated value, or the like) indicated by a value of a particular field in the DCI (also referred to as a TPC command field, a first field, or the like).

The TPC command field may be included in particular DCI (for example, DCI format 1_0/1_1/1_2/2_2). In Rel-16 NR, the TPC command field may have a bit length of two bits. A particular DCI (for example, DCI format 2_2) may include a field indicating closed loop power control (for example, a closed loop indicator field).

For example, a PUCCH transmit power ($P_{\text{PUCCH, b, f, c}}(i, q_u\ q_d\ l)$) in a PUCCH transmission occasion i (also referred to as transmission duration or the like) on an active UL BWP b of a carrier f of a serving cell c using the index l of the power control adjustment state may be expressed by equation (1) below.

The power control adjustment state may be referred to as a PUCCH power control adjustment state, a first or second state, or the like.

The PUCCH transmission occasion i is a given duration in which a PUCCH is transmitted, and may include for example, one or more symbols, one or more slots, and the like.

[Math. 1]

(Equation 1)

$$P_{\text{PUCCH},b,f,c}(i, q_u, q_d, l) =$$

$$min\left\{\begin{matrix} P_{\text{CMAX},f,c}(i), \\ P_{\text{O\_PUCCH},b,f,c}(q_u) + 10\log_{10}\left(2^{\mu} \cdot M_{\text{RB},b,f,c}^{\text{PUCCH}}(i)\right) + PL_{b,f,c}(q_d) + \Delta_{\text{F\_PUCCH}}(F) + \Delta_{\text{TF},b,f,c}(i) + g_{b,f,c}(i,l) \end{matrix}\right\}$$

In equation (1), $P_{\text{CMAX, f, c}}(i)$ represents, for example, a transmit power of a user terminal configured for the carrier f of the serving cell c in the transmission occasion i (also referred to as a maximum transmit power, a UE maximum output power, or the like). $P_{\text{O\_PUCCH, b, f, c}}(q_u)$ represents, for example, a parameter for a target received power configured for the active UL BWP b of the carrier f of the serving cell c in the transmission occasion i (also referred to as, for example, a parameter regarding a transmit power offset, a transmit power offset P0, a target received power parameter, or the like).

$M^{\text{PUCCH}}_{\text{RB, b, f, c}}(i)$ represents, for example, the number of resource blocks (bandwidth) allocated to a PUCCH for the transmission occasion i in the active UL BWP b of the carrier f of the serving cell c and a subcarrier spacing $\mu$. $PL_{b, f, c}(q_d)$ represents, for example, a pathloss calculated by the user terminal using the index $q_d$ of a reference signal for downlink BWP associated with the active UL BWP b of the carrier f of the serving cell c (pathloss reference RS, pathloss measurement DL RS, PUCCH-PathlossReferenceRS).

$\Delta_{\text{F\_PUCCH}}(F)$ represents a higher layer parameter given per PUCCH format. $\Delta_{\text{TF, b, f, c}}(i)$ represents a transmission power adjustment component (offset) for the UL BWP b of the carrier f of the serving cell c.

$g_{b, f, c}(i, l)$ represents a value based on the TPC command having the power control adjustment state index l described above for the active UL BWP of the carrier f of the serving cell c and the transmission occasion i (for example, the power control adjustment state, an accumulated value of the TPC command, a value by a closed loop, or a PUCCH power adjustment state). For example, $g_{b, f, c}(i, l)$ may be expressed by equation (2). l may be referred to as a closed loop index.

[Math. 2]

(Equation 2)

$$g_{b,f,c}(i, l) = g_{b,f,c}(i - i_0, l) + \sum_{m=0}^{C(C_i)-1} \delta_{\text{PUCCH},b,f,c}(m, l)$$

In equation (2), $\delta_{PUCCH, b, f, c}(m, l)$ represents a TPC command value in a PUCCH transmission occasion m. $\sum_{m=0}^{C(C\_i)-1}\delta_{PUCCH, b, f, c}(m, l)$ represents a sum of TPC command values in a set of TPC command values of a cardinality $C(C_i)$ between $K_{PUCCH}(i-i_0) - 1$ symbols before a PUCCH transmission occasion $i-i_0$ and $K_{PUCCH}(i)$ symbols before a PUCCH transmission occasion i. Here, $i_0$ represents an integer of 1 or more. A TPC command value in a PUCCH transmission occasion may be a TPC command indicated by the TPC command field value in the DCI (for example, DCI format 1_0 or 1_1) detected in the active UL BWP b of the carrier f of the serving cell c, or a TPC command indicated by the TPC command field value in the DCI (for example, DCI format 2_2) having a CRC parity bit scrambled (CRC-scrambled) with a particular Radio Network Temporary Identifier (RNTI) (for example, TPC-PUCCH-RNTI).

In a case that the UE is provided with information indicating that two PUCCH power control adjustment states are used (twoPUCCH-PC-AdjustmentStates) and the PUCCH spatial relation information (PUCCH-SpatialRelationInfo), l = {0, 1} may hold. In a case that the UE is not provided with the information indicating that two PUCCH power control adjustment states are used or the PUCCH spatial relation information, l = 0 may hold.

In a case that the UE obtains the TPC command value from DCI format 1_0 or 1_1, and the UE is provided with the PUCCH spatial relation information, the UE may obtain mapping (correspondence, association) between a PUCCH spatial relation information ID (pucch-SpatialRelationInfoId) value and a closed loop index (closedLoopIndex, power adjustment state index l) by an index provided by a PUCCH P0 ID (p0-PUCCH-Id in p0-Set in PUCCH-PowerControl in PUCCH-Config). In a case that the UE receives an activation command including the PUCCH spatial relation information ID value, the UE may determine a value of the closed loop index providing a value of l through a link to the corresponding PUCCH P0 ID.

In a case that the UE is provided with a configuration of a $P_{O\_PUCCH, b, f, c}(q_u)$ value for the corresponding PUCCH power adjustment state l on the active UL BWP b of the carrier f of the serving cell c by the higher layer, $g_{b, f, c}(k, l) = 0$ and k = 0, 1, ..., i. In a case that the UE is provided with the PUCCH spatial relation information, the UE may determine a value of l from a value of $q_u$ based on the PUCCH spatial relation information associated with the PUCCH P0 ID corresponding to $q_u$ and the closed loop index value corresponding to 1.

$q_u$ may represent the PUCCH P0 ID (p0-PUCCH-Id) indicating a PUCCH P0 (P0-PUCCH) in a PUCCH P0 set (p0-Set).

Note that equations (1) and (2) are merely examples, and that the present disclosure is not limited to this. So long as the user terminal controls the PUCCH transmit power based on at least one parameter shown in equations (1) and (2), additional parameters may be included, or some parameters may be omitted. In equations (1) and (2) described above, the PUCCH transmit power is controlled per active UL BWP of a carrier of a serving cell, but the present disclosure is not limited to this. At least some of the serving cell, the carrier, the BWP, and the power control adjustment state may be omitted.

(Multi-TRP)

For NR, a study is underway in which the UE performs UL transmission (for example, PUCCH transmission) to one or more transmission/reception points (TRPs) (multi-TRP (M-TRP)).

As an example, to improve reliability of PUCCH for a use case (or a service) of ultra-reliable and low latency (for example, Ultra Reliable and Low Latency Communications (URLLC)), a study is underway to repeatedly transmit, to the multi-TRP, a PUCCH for which different SRI is applied. Repetitive transmission of the PUCCH may be referred to as PUCCH repetition. The repetitive transmission may be simply referred to as repetition.

Note that the SRI may correspond to a beam. For example, the UE may assume that a PUCCH with different SRI is transmitted using a different beam.

According to the repetitive transmission of the PUCCH, received quality on the network side can be expected to be improved for the PUCCH. However, in current Rel. 15/16 NR, only the same spatial relation is permitted to be applied to the PUCCH repetitive transmission.

More specifically, in the repetitive transmission of the PUCCH across a plurality of TRPs, a study is underway to configure/activate/indicate multiple spatial relation information (SRI) for the plurality of TRPs. In this case, in consideration of different channel states between the UE and different TRPs, independent closed loop power controls for the plurality of TRPs (for example, power control where the index associated with the different TPC (for example, closed loop index) corresponds to the different SRI) are required.

However, a study is not sufficient about how to indicate a plurality of TPC commands for a plurality of closed loop power controls by single DCI, and thus, controls suitable to multiple SRI cannot be performed. In Rel. 15/16, up to two independent closed loop power controls are supported, but more independent closed loop power controls are required in consideration of the UL transmission across a plurality of TRPs.

Therefore, in accordance with the previous NR specifications, different SRI cannot be applied in the PUCCH repetition, and thus, a received quality of the PUCCH cannot be efficiently improved. In this case, a spatial diversity gain, a high rank transmission, or the like in a case of using the multi-TRP cannot be preferably achieved, and thus, increase in communication throughput may be suppressed.

Thus, the inventors of the present invention came up with the idea of a method to achieve preferable PUCCH repetitive transmission. In an aspect of the present disclosure, for example, the UE can appropriately determine the number of repetitions for the PUCCH repetition using different spatial relations.

Hereinafter, embodiments according to the present disclosure will be described in detail with reference to the drawings. The radio communication methods according to respective embodiments may each be employed individually, or may be employed in combination.

Note that in the present disclosure, "A/B" may refer to "at least one of A and B". In addition, "configured/activated/indicated" may refer to at least one of "configured" through higher layer signaling (for example, RRC signaling), "activated" through MAC signaling (for example, MAC CE), and "indicated" through physical layer signaling (for example, DCI).

Note that in the present disclosure, activate, deactivate, indicate (or specify), select, configure, update, determine, and the like may be interchangeably interpreted. In the present disclosure, sequence, list, set, group, cardinality, cluster, subset, and the like may be interchangeably interpreted.

In the present disclosure, panel, beam, panel group, beam group, Uplink (UL) transmission entity, TRP, spatial relation information (SRI), combination of SRI, spatial relation information for PUCCH, pucch-spatialRelationInfo, spatialRelationInfo, spatial relation, control resource set (COntrol REsource SET (CORESET)), Physical Downlink Shared Channel (PDSCH), codeword, base station, given antenna port (for example, demodulation reference signal (DMRS) port), given antenna port group (for example, DMRS port group), given group (for example, code division multiplexing (CDM) group, given reference signal group, CORESET group), given resource (for example, given reference signal resource), given resource set (for example, given reference signal resource set), CORESET pool, PUCCH group (PUCCH resource group), spatial relation group, TCI state, downlink TCI state (DL TCI state), uplink TCI state (UL TCI state), unified TCI state, QCL, and the like may be interchangeably interpreted.

In the present disclosure, i-th spatial relation information (pucch-spatialRelationInfo) may mean i-th spatial relation information configured/activated/indicated for a certain PUCCH resource (i represents an integer) in a case that multiple spatial relation information are configured/activated/indicated for the certain PUCCH resource. In the present disclosure, i-th spatial relation information may mean spatial relation information configured/activated/indicated for i-th PUCCH resource in a case that a plurality of PUCCH resources are configured/activated/indicated for the repetitive transmission of the PUCCH.

In the present disclosure, the number of spatial relation information (pucch-spatialRelationInfo) may mean the number of spatial relation information configured/activated/indicated for a certain PUCCH resource in the case that multiple spatial relation information are configured/activated/indicated for the certain PUCCH resource. In the present disclosure, the number of spatial relation information (pucch-spatialRelationInfo) may mean the number of spatial relation information configured/activated/indicated for a repetitive transmission of the PUCCH, in a case that a plurality of PUCCH resources are configured/activated/indicated for the repetitive transmission of the PUCCH.

Note that i-th TRP (TRP #i) for single DCI may mean i-th TCI state, i-th CDM group, or the like (i represent an integer).

Note that i-th TRP (TRP #i) for multi-DCI may mean CORESET corresponding to CORESET pool index = i, i-th TCI state, i-th CDM group, or the like(i represent an integer).

The panel may be associated with at least one of a group index of an SSB/CSI-RS group, a group index of a group-based beam report, and a group index of an SSB/CSI-RS group for a group-based beam report.

A panel Identifier (ID) and a panel may be interchangeably interpreted. Specifically, TRP ID and TRP, CORESET group ID and CORESET, or the like may be interchangeably interpreted.

In the present disclosure, an index, an ID, an indicator, and a resource ID may be interchangeably interpreted. In the present disclosure, list, group, cluster, subset and the like may be interchangeably interpreted.

In the present disclosure, a simple description of "spatial relation" may be interchangeably interpreted as a PUCCH spatial relation.

The PUCCH repetition in the present disclosure may be interchangeably interpreted as MTRP-based repetition, Rel. 17 repetition, repetition for which different spatial relation is applied, and the like. The PUCCH is described in an example below as a PUCCH used for a Hybrid Automatic Repeat reQuest ACKnowledgement (HARQ-ACK) transmission responsive to a PDSCH, but may be or may be interpreted as a PUCCH for a transmission of at least one of UCI such as HARQ-ACK, SR, CSI (for example, aperiodic CSI).

Multiple spatial relation information (SRI) in the present disclosure may be interchangeably interpreted as an SRI sequence, a set of SRI, a pattern of SRI, SRI applied to PUCCH repetition, and the like.

A PUCCH across a plurality of TRPs in the following embodiments may be interchangeably interpreted as repeated PUCCH across a plurality of TRPs, simply repetition PUCCH, repetitive transmission, a plurality of PUCCH transmissions, and the like.

(Radio Communication Method)

A particular index for performing the repetitive transmission of PUCCH using a plurality of TRPs, the particular index being determined by the UE is described. The particular index may be an index associated with the TPC (for example, closed loop index). The UE may control a plurality of PUCCH transmissions based at least on the particular index.

The number of candidates for the particular index determined by the UE (for example, closed loop index) may increase to the particular number (for example, N) in comparison with that in Rel. 15/16. The particular number N may be four, for example. A possible value of the particular index may be from 0 to N - 1, for example.

Then, in an RRC configuration, a correspondence relation between the spatial relation information (SRI, for example, pucch-spatialRelationInfo) and N particular indices may be configured for the UE. The UE may be updated regarding the correspondence relation through higher layer signaling (for example, MAC CE).

The UE may determine, based on the correspondence relation, the value of the particular index corresponding to each SRI indicated by the DCI.

In a case that the number of candidates for the particular index is N, the number of bits of a field (for example, a closed loop indicator field) that is included in a particular DCI format (for example, DCI format 2_2) and indicates a closed loop power control may increase to $\log_2(N)$ bits as compared with Rel. 15/16. For example, in a case that N = 4, the field may have a bit length of two bits. The particular DCI format may be scrambled with a particular RNTI (for example, at least one of the TPC-PUSCH-RNTI and the TPC-PUCCH-RNTI).

Even in the case of performing the repetitive transmission of the PUCCH using a plurality of TRPs, the index appropriately associated with the TPC can be determined.

An embodiment describes the number of bits of a TPC command field included in single DCI scheduling a PUCCH transmission across a plurality of TRPs, and correspondence between the TPC command field and the index associated with the TPC (for example, a closed loop index). The UE may control a plurality of PUCCH transmissions based at least on the index.

The number of bits of a TPC command field included in single DCI (for example, DCI format 1_0/1_1/1_2) scheduling a PUCCH transmission across a plurality of TRPs may be extended to a particular number of bits (for example, 2M) as compared with the number of bits in Rel. 15/16. In the present disclosure, M may be the number of TRPs, or may be the number of spatial relation information (SRI, for example, pucch-spatialRelationInfo) possibly configured/activated/indicated for a PUCCH transmission across a plurality of TRPs.

For example, in a case that the SRI for the PUCCH transmission to two TRPs is indicated by the DCI, the TPC command field may be extended to four bits.

Correspondence between the extended TPC command field and the particular index associated with the TPC (for example, a closed loop index) may conform to at least one of a correspondence 1 or a correspondence 2 described below. Hereinafter, a closed loop index is described, and a closed loop index according to the present disclosure may be interpreted as any particular index associated with the TPC.

[Correspondence 1]

In a case that the extended TPC command field is divided by a particular number of bits (for example, two, four, or the like), the x-th (x represents any integer) smallest (or largest) particular number of bits may correspond to the x-th spatial relation information configured/activated/indicated (SRI, for example, pucch-spatialRelationInfo).

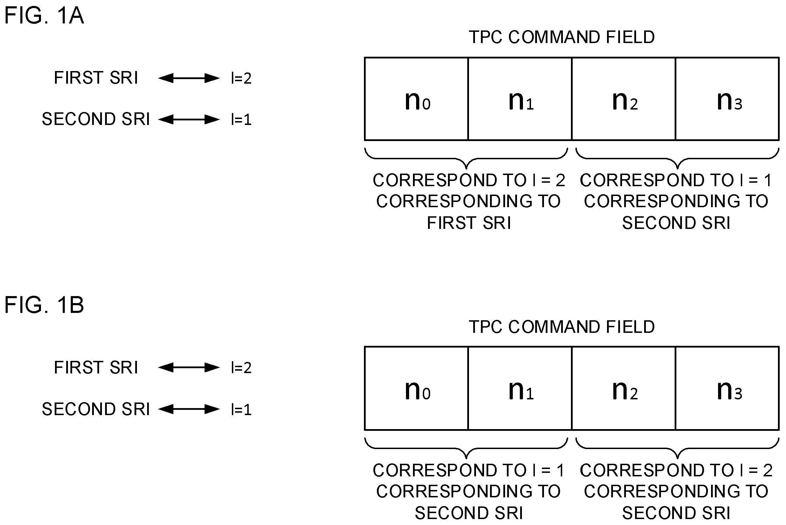

FIG. 1A is a diagram to show an example of a correspondence between the extended TPC command field and the closed loop index. The example shown in FIG. 1A shows a case of M = 2, in which a first SRI corresponds to a closed loop index l = 2 and a second SRI corresponds to a closed loop index l = 1. In the example shown in FIG. 1A, the TPC command field is expressed with a left side being lower-order bits and a right side being higher-order bits. Then, lower-order two bits of the TPC command field ($n_0$ and $n_1$) correspond to the closed loop index l = 2 corresponding to the first SRI, and higher-order two bits ($n_2$ and $n_3$) correspond to the closed loop index l = 1 corresponding to the second SRI.

Note that in the drawings shown in the present disclosure, the SRI, the value of the closed loop index, the number of bits and value of the TPC command field, and the like are all examples, and that the present disclosure is not limited to this. In the drawings shown in the present disclosure, the TPC command field is expressed, for the convenience of the description, with the left side being lower-order bits and the right side being higher-order bits, but the present disclosure is not limited to this.

[Correspondence 2]

In the case that the extended TPC command field is divided by the particular number of bits (for example, two), the x-th smallest (or largest) particular number of bits may correspond to the spatial relation information (SRI) corresponding to the x-th smallest (or largest) closed loop index configured/activated/indicated.

In the present disclosure, "small" may be interpreted as "large". In addition, lower-order and lowest-order may be interpreted as higher-order and highest-order, respectively.

FIG. 1B is a diagram to show an example of a correspondence between the extended TPC command field and the closed loop index. The example shown in FIG. 1B shows the case of M = 2, in which a first SRI corresponds to a closed loop index l = 2 and a second SRI corresponds to a closed loop index l = 1. Then, lower-order two bits of the TPC command field ($n_0$ and $n_1$) correspond to the closed loop index l = 1 corresponding to the second SRI, and higher-order two bits ($n_2$ and $n_3$) correspond to the closed loop index l = 2 corresponding to the first SRI.

In a case that at least two of a plurality of pieces of SRI configured/activated/indicated correspond to the same closed loop index, the correspondence between the extended TPC command field and the particular index associated with the TPC may conform to at least one of a correspondence 2-1 or a correspondence 2-2 described below.

<<Correspondence 2-1>>

Valid bits of the TPC command may be determined based on values of different closed loop indices corresponding to the configured/activated/indicated SRI. The UE may determine the valid bits for the TPC command field based on the values of the different closed loop indices.

Specifically, the UE may determine that the particular number (for example, 2L) of lower-order (or higher-order) bits of the TPC command field included in the DCI are the valid bits. The other bits may be set to a fixed value (for example, 0 or 1). The UE may ignore the relevant other bits. Then, L may represent a value of a different closed loop index corresponding to the configured/activated/indicated SRI.

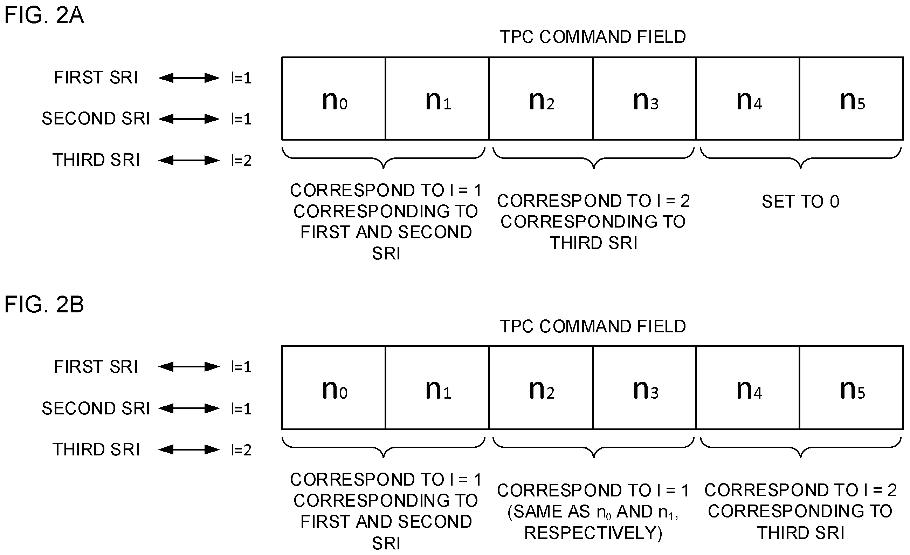

FIG. 2A is a diagram to show another example of the correspondence between the extended TPC command field and the closed loop index. In the example shown in FIG. 2A, the first SRI and the second SRI correspond to the closed loop index l = 1, and a third SRI corresponds to the closed loop index l = 2. Then, the lowest-order two bits of the TPC command field ($n_0$ and $n_1$) correspond to the closed loop index l = 1 corresponding to the first SRI and the second SRI, and the next lower-order two bits ($n_2$ and $n_3$) correspond to the closed loop index l = 2 corresponding to the third SRI.

Then, the highest-order two bits of the TPC command field ($n_4$ and $n_5$) may be set to a fixed value (for example, 0 or 1).

<<Correspondence 2-2>>

Valid bits of the TPC command may be determined based on at least one of the number of TRPs (PUCCHs) or the number of SRI possibly configured/activated/indicated for the PUCCH transmission by a plurality of TRPs. The UE may determine the valid bits for the TPC command field based on at least one of the number of TRPs (PUCCHs) or the number of SRI possibly configured/activated/indicated for the PUCCH transmission by a plurality of TRPs.

Specifically, the UE may determine that the particular number of bits (for example, 2M) of the TPC command field included in the DCI are the valid bits. Then, M may represent the number of TRPs, or may represent the number of SRI possibly configured/activated/indicated for the PUCCH transmission by a plurality of TRPs.

2L bits (L represents the number of values of the different closed loop indices corresponding to the SRI, for example) of 2M bits of the TPC command field in the DCI may indicate a TPC command corresponding to any closed loop index. The other bits (remaining 2M - 2L bits) may be set to a value the same as any of the values of the valid bits. In other words, the other bits may have a copied value of any of the values of the valid bits. The relevant other bits may have a copied value of the TPC command field value corresponding to the same value of the closed loop index corresponding to at least two of SRIs.

FIG. 2B is a diagram to show another example of the correspondence between the extended TPC command field and the closed loop index. In the example shown in FIG. 2B, the first SRI and the second SRI correspond to the closed loop index l = 1, and the third SRI corresponds to the closed loop index l = 2. Then, the lowest-order two bits of the TPC command field ($n_0$ and $n_1$) correspond to the closed loop index l = 1 corresponding to the first SRI and the second SRI, and the next highest-order two bits ($n_4$ and $n_5$) correspond to the closed loop index l = 2 corresponding to the third SRI.

Then, $n_2$ and $n_3$ in the TPC command field have a copied value of the TPC command field value corresponding to the same value of the closed loop index corresponding to at least two of SRIs. Specifically, $n_2$ and $n_3$ in the TPC command field are set to the same value of $n_0$ and $n_1$.

[Variation of Embodiment]

In a case that a dynamic switching between the PUCCH transmission using one TRP and the PUCCH transmission using a plurality of TRPs is supported (for example, in a case that single or multiple SRIs are permitted to be configured/activated/indicated), single or multiple SRIs may be configured/activated/indicated. Then, in a case that single SRI is configured/activated/indicated, the extended TPC command field may conform to at least one of a method 1 or a method 2 described below.

Note that the present embodiment is also applicable to a case that the number of configured/activated/indicated SRI (for example, pucch-spatialRelationInfo) is smaller than the number of particular durations (for example, transmission occasions, slots) configured/activated/indicated.

<<Method 1>>

The UE may determine that the particular number (for example, 2) of the lowest-order (or highest-order) bits of the TPC command field included in the DCI are the valid bits. The other bits may be set to a fixed value (for example, 0 or 1). The UE may ignore the relevant other bits.

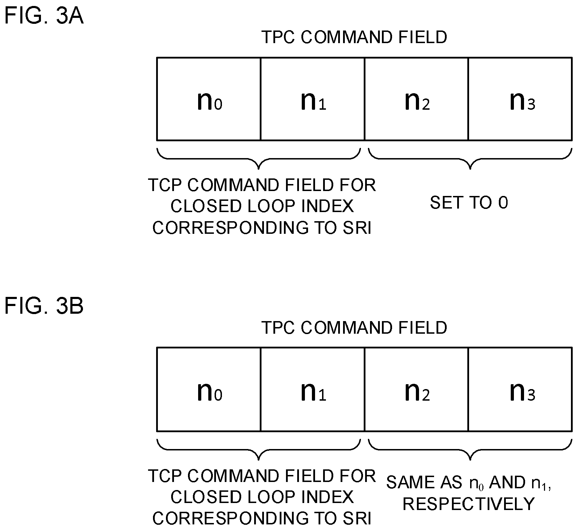

FIG. 3A is a diagram to show an example of a correspondence between the extended TPC command field and the spatial relation information (SRI). Then, the lowest-order two bits ($n_0$ and $n_1$) of the TPC command field are used for the TPC command field for the closed loop index corresponding to the SRI. On the other hand, remaining two bits ($n_2$ and $n_3$) are set to a fixed value (here, 0).

<<Method 2>>

The UE may determine that the particular number of bits (for example, 2M) of the TPC command field included in the DCI are the valid bits. Then, M may represent the number of TRPs, or may represent the maximum number of SRI possibly configured/activated/indicated for the PUCCH transmission by a plurality of TRPs.

Some bits (for example, two bits) of 2M bits of the TPC command field in the DCI may indicate a TPC command corresponding to any closed loop index. The other bits (remaining 2M - 2 bits) may be set to a value the same as the value set for the relevant some bits.

FIG. 3B is a diagram to show an example of the correspondence between the extended TPC command field and the SRI. Then, the lowest-order two bits ($n_0$ and $n_1$) of the TPC command field are used for the TPC command field for the closed loop index corresponding to the SRI. On the other hand, remaining two bits ($n_2$ and $n_3$) are set to a value the same as the value of the valid bits, in other words, $n_0$ and $n_1$, respectively.

According to the variation of the embodiment, whether the number of configured/activated/indicated SRI is one or more than one, the TPC command for each SRI can be appropriately determined using the extended TPC command field.

According to the embodiment and the variation of the embodiment described above, the correspondence between the extended TPC command field and the index associated with the TPC can be appropriately configured.

A UE capability for the index associated with the TPC (for example, a closed loop index) is described

· The UE may report (transmit) whether to have the capability information to a NW.

The UE capability for the index associated with the TPC may be defined as the maximum number of a total number of the indices for a plurality of (for example, all) TRPs in a serving cell. In other words, the UE capability may be defined as the maximum number of the total number of the indices for a plurality of PUCCHs.

The UE capability for the index associated with the TPC may be defined as the maximum number of the indices per TRP in a serving cell. In other words, the UE capability may be defined as the maximum number of the indices for one PUCCH of a plurality of PUCCHs.

Note that each embodiment of the present disclosure may be applicable under at least one of conditions of a case that the UE reports the UE capability corresponding to at least one of the above to the NW, and a case that at least one UE capability above is configured/activated/indicated for the UE through higher layer signaling. Each embodiment of the present disclosure may be applicable to a case that a particular higher layer parameter (for example, information enabling the extended TPC command field, information configuring more than two closed loop indices, a parameter enabling the M-TRP repetition, or the like) is configured/activated/indicated for the UE.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

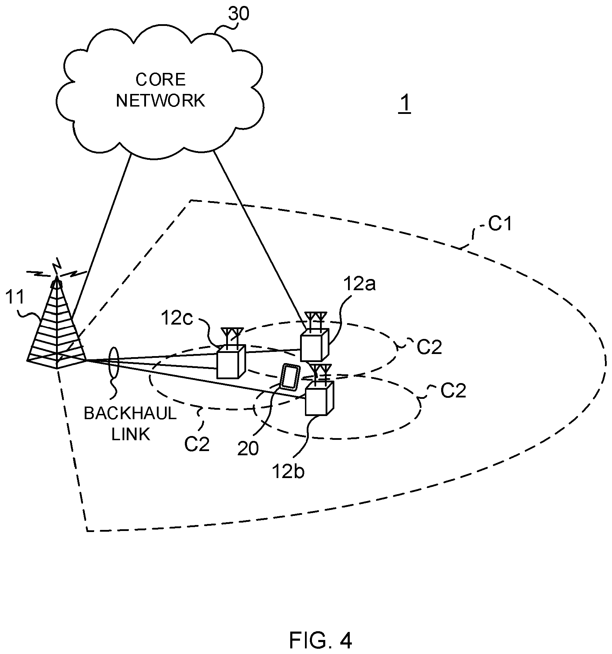

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations (RRHs) 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted .

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted . In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

(Base Station)

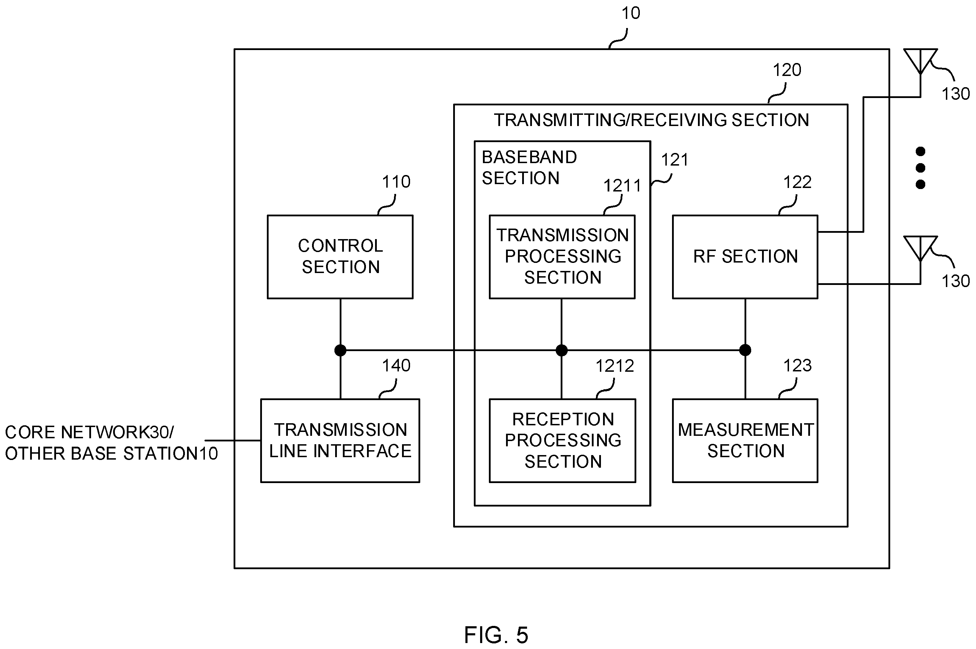

FIG. 5 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit single downlink control information (DCI) for a plurality of physical uplink control channels (PUCCHs). The control section 110 may control reception of the PUCCHs transmitted based on the extended transmit power control (TPC) command field included in the DCI and the spatial relation information (SRI) corresponding to the index associated with the TPC (the first embodiment).

(User Terminal)

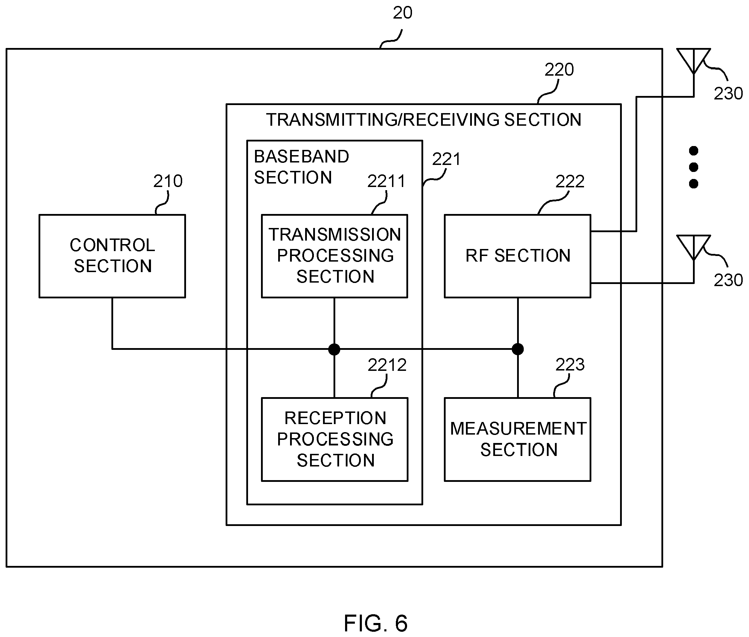

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive single downlink control information (DCI) for a plurality of physical uplink control channels (PUCCHs). The control section 210 may control transmission of the PUCCHs based on the extended transmit power control (TPC) command field included in the DCI and the spatial relation information (SRI) corresponding to an index associated with the TPC (the first and second embodiments).

The control section 210 may control the transmission of the PUCCHs based on the SRI corresponding to each particular number of bits of the extended TPC command field being divided into a particular number (the second embodiment).

The control section 210 may determine the valid bits in the extended TPC command field based on at least one of the number of the indices associated with the different TPC, the number of the PUCCHs, and the number of the SRI (the second embodiment).

The control section 210 may control such that capability information is reported, the capability information being defined as a maximum number of a total number of indices associated with the TPC for the plurality of PUCCHs, or a maximum number of indices associated with the TPC for one PUCCH of the plurality of PUCCHs (the third embodiment).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

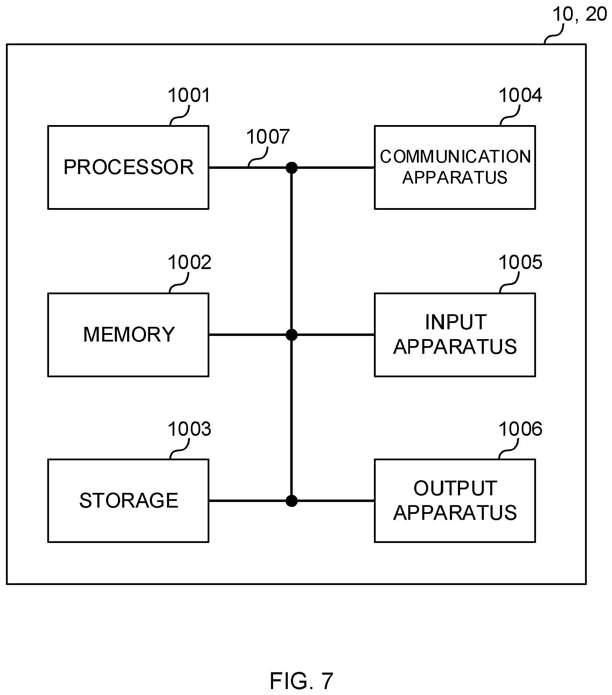

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

**Claims**

1. A terminal (20) comprising:

   a receiving section (220) configured to receive single downlink control information, DCI, for repetitive transmission of a physical uplink control channel, PUCCH; and
   a control section (210) configured to, when one or more spatial relation information are activated for a resource for the repetitive transmission of the PUCCH, control a transmission power of each of the repetitive PUCCH, based on a particular number of lower-order bits for a transmission power control, TPC, command corresponding to a first closed loop index and a particular number of higher-order bits, different from the lower-order bits, for a TPC command corresponding to a second closed loop index that are included in the DCI, and based on at least one of the first closed loop index and the second closed loop index that correspond to the one or more spatial relation information,
   wherein when multiple spatial relation information are activated and the transmission power of the PUCCH is controlled based on both the first closed loop index and the second closed loop index, a total number of bits of the particular number of lower-order bits and the particular number of higher-order bits is twice a number of activated spatial relation information.

2. The terminal (20) according to claim 1, wherein when the one or more spatial relation information are activated, the control section (210) is configured to use one of the particular number of lower-order bits and the particular number of higher-order bits to control the transmission power of the PUCCH, and ignore the other of the particular number of lower-order bits and the particular number of higher-order bits.

3. The terminal (20) according to any one of claims 1 to 2, wherein a number of bits of the particular number of higher-order bits is configured by higher layer signaling.

4. A radio communication method for a terminal (20), the method comprising:

   receiving single downlink control information, DCI, for repetitive transmission of a physical uplink control channel, PUCCH; and
   when one or more spatial relation information are activated for a resource for the repetitive transmission of the PUCCH, controlling a transmission power of each of the repetitive PUCCH, based on a particular number of lower-order bits for a transmission power control, TPC, command corresponding to a first closed loop index and a particular number of higher-order bits, different from the lower-order bits, for a TPC command corresponding to a second closed loop index that are included in the DCI, and based on at least one of the first closed loop index and the second closed loop index that correspond to the one or more spatial relation information
   wherein when multiple spatial relation information are activated and the transmission power of the PUCCH is controlled based on both the first closed loop index and the second closed loop index, a total number of bits of the particular number of lower-order bits and the particular number of higher-order bits is twice a number of activated spatial relation information.

5. A base station (10) comprising:

   a transmitting section (120) configured to transmit single downlink control information, DCI, for repetitive transmission of a physical uplink control channel, PUCCH; and
   a control section (110) configured to, when the control section activates, for a terminal (20), one or more spatial relation information for a resource for the repetitive transmission of each of the repetitive PUCCH, control to include a particular number of lower-order bits for a transmission power control, TPC, command corresponding to a first closed loop index and a particular number of higher-order bits, different from the lower-order bits, for a TPC command corresponding to a second closed loop index in the DCI so as to cause the terminal to control a transmission power of the PUCCH,

wherein at least one of the first closed loop index and the second closed loop index corresponds to the one or more spatial relation information,

wherein when multiple spatial relation information are activated and the transmission power of the PUCCH is controlled based on both the first closed loop index and the second closed loop index, a total number of bits of the particular number of lower-order bits and the particular number of higher-order bits is twice a number of activated spatial relation information.

**6.** A system comprising a terminal (20) according to any of claims 1-3 and a base station (10) according to claim 5.

**Patentansprüche**

**1.** Endgerät (20), umfassend:

einen Empfangsabschnitt (220), der konfiguriert ist, um einzelne Downlink-Steuerinformationen, DCI, für eine wiederholte Übertragung eines physischen Uplink-Steuerkanals, PUCCH, zu empfangen; und

einen Steuerabschnitt (210), der konfiguriert ist, um, wenn eine oder mehrere Informationen zur räumlichen Beziehung für eine Ressource für die wiederholte Übertragung des PUCCH aktiviert sind, eine Übertragungsleistung jedes des wiederholten PUCCH basierend auf einer bestimmten Anzahl von Bits niedrigerer Ordnung für einen Übertragungsleistungs-, TPC-, Befehl, der einem ersten Index einer geschlossenen Schleife entspricht, und einer bestimmten Anzahl von Bits höherer Ordnung, die sich von den Bits niedrigerer Ordnung unterscheiden, für einen TPC-Befehl, der einem zweiten Index einer geschlossenen Schleife entspricht, die in den DCI eingeschlossen sind, und basierend auf mindestens einem von dem ersten Index einer geschlossenen Schleife und dem zweiten Index einer geschlossenen Schleife, die einer oder mehreren Informationen zur räumlichen Beziehung entsprechen, zu steuern,

wobei, wenn mehrere Informationen zur räumlichen Beziehung aktiviert sind und die Übertragungsleistung des PUCCH basierend auf sowohl dem ersten Index einer geschlossenen Schleife als auch dem zweiten Index einer geschlossenen Schleife gesteuert wird, eine Gesamtanzahl von Bits der bestimmten Anzahl von Bits niedrigerer Ordnung und der bestimmten Anzahl von Bits höherer Ordnung das Doppelte einer Anzahl von aktivierten Informationen zur räumlichen Beziehung sind.

**2.** Endgerät (20) nach Anspruch 1, wobei, wenn die eine oder mehreren Informationen zur räumlichen Beziehung aktiviert sind, der Steuerabschnitt (210) konfiguriert ist, um einen der bestimmten Anzahl von Bits niedrigerer Ordnung und der bestimmten Anzahl von Bits höherer Ordnung zu verwenden, um die Übertragungsleistung des PUCCH zu steuern, und die anderen der bestimmten Anzahl von Bits niedrigerer Ordnung und der bestimmten Anzahl von Bits höherer Ordnung zu ignorieren.

**3.** Endgerät (20) nach einem der Ansprüche 1 bis 2, wobei eine Anzahl von Bits der bestimmten Anzahl von Bits höherer Ordnung durch Signalisierung auf höherer Schicht konfiguriert ist.

**4.** Funkkommunikationsverfahren für ein Endgerät (20), wobei das Verfahren umfasst:

Empfangen von einzelnen Downlink-Steuerinformationen, DCI, für eine wiederholte Übertragung eines physischen Uplink-Steuerkanals, PUCCH; und

wenn eine oder mehrere Informationen zur räumlichen Beziehung für eine Ressource für die wiederholte Übertragung des PUCCH aktiviert sind, Steuern einer Übertragungsleistung jedes des wiederholten PUCCH basierend auf einer bestimmten Anzahl von Bits niedrigerer Ordnung für einen Übertragungsleistungssteuerungs-, TPC-, Befehl, der einem ersten Index einer geschlossenen Schleife entspricht, und einer bestimmten Anzahl von Bits höherer Ordnung, die sich von den Bits niedrigerer Ordnung unterscheiden, für einen TPC-Befehl, der einem zweiten Index einer geschlossenen Schleife entspricht, die in den DCI eingeschlossen sind, und basierend auf mindestens einem von dem ersten Index einer geschlossenen Schleife und dem zweiten Index einer geschlossenen Schleife, die der einen oder den mehreren Informationen zur räumlichen Beziehung entsprechen

wobei, wenn mehrere Informationen zur räumlichen Beziehung aktiviert sind und die Übertragungsleistung des PUCCH basierend auf sowohl dem ersten Index einer geschlossenen Schleife als auch dem zweiten Index einer geschlossenen Schleife gesteuert wird, eine Gesamtanzahl von Bits der bestimmten Anzahl von Bits niedrigerer Ordnung und der bestimmten Anzahl von Bits höherer Ordnung das Doppelte einer Anzahl von aktivierten Informationen zur räumlichen Beziehung sind.

5. Basisstation (10), umfassend:

einen Übertragungsabschnitt (120), der konfiguriert ist, um einzelne Downlink-Steuerinformationen, DCI, für eine wiederholte Übertragung eines physischen Uplink-Steuerkanals, PUCCH, zu übertragen; und
einen Steuerabschnitt (110), der konfiguriert ist, um, wenn der Steuerabschnitt eine oder mehrere Informationen zur räumlichen Beziehung für eine Ressource für die wiederholte Übertragung jedes des wiederholten des PUCCH für ein Endgerät (20) aktiviert, zu steuern, eine bestimmte Anzahl von Bits niedrigerer Ordnung für einen Übertragungsleistungs-, TPC-, Befehl, der einem ersten Index einer geschlossenen Schleife entspricht, und eine bestimmte Anzahl von Bits höherer Ordnung, die sich von den Bits niedrigerer Ordnung unterscheiden, für einen TPC-Befehl, der einem Index einer zweiten geschlossenen Schleife entspricht, in den DCI einzuschließen, um zu veranlassen, dass das Endgerät eine Übertragungsleistung des PUCCH steuert,
wobei mindestens einer des ersten Index einer geschlossenen Schleife und des zweiten Index einer geschlossenen Schleife der einen oder den mehreren Informationen zur räumlichen Beziehung entspricht,
wobei, wenn mehrere Informationen zur räumlichen Beziehung aktiviert sind und die Übertragungsleistung des PUCCH basierend auf sowohl dem ersten Index einer geschlossenen Schleife als auch dem zweiten Index einer geschlossenen Schleife gesteuert wird, eine Gesamtanzahl von Bits der bestimmten Anzahl von Bits niedrigerer Ordnung und der bestimmten Anzahl von Bits höherer Ordnung das Doppelte einer Anzahl von aktivierten Informationen zur räumlichen Beziehung sind.

6. System, das ein Endgerät (20) nach einem der Ansprüche 1-3 und eine Basisstation (10) nach Anspruch 5 umfasst.

**Revendications**

1. Terminal (20) comprenant :

une section de réception (220) configurée pour recevoir des informations de commande de liaison descendante unique, DCI, pour la transmission répétitive d'un canal de commande ascendant physique, PUCCH ; et
une section de commande (210) configurée pour, lorsqu'une ou plusieurs informations de relation spatiale sont activées pour une ressource pour la transmission répétitive du PUCCH, commander la puissance de transmission de chacun des PUCCH répétitifs, sur la base d'un nombre particulier de bits d'ordre inférieur pour une commande de commande de puissance de transmission, TPC, correspondant à un premier indice de boucle fermée et un nombre particulier de bits d'ordre supérieur, différent des bits d'ordre inférieur, pour une commande de TPC correspondant à un deuxième indice de boucle fermée qui est inclus dans le DCI, basée sur au moins un du premier indice de boucle fermée et du second indice de boucle fermée qui correspondent auxdites une ou plusieurs informations de relation spatiale,
dans lequel, lorsque plusieurs informations de relation spatiale sont activées et que la puissance de transmission du PUCCH est commandée sur la base à la fois du premier indice de boucle fermée et du second indice de boucle fermée, un nombre total de bits du nombre particulier de bits d'ordre inférieur et du nombre particulier de bits d'ordre supérieur est deux fois supérieur à un nombre d'informations de relation spatiale activées.

2. Terminal (20) selon la revendication 1, dans lequel, lorsque la une ou plusieurs informations de relation spatiale sont activées, la section de commande (210) est configurée pour utiliser un du nombre particulier des bits d'ordre inférieur et du nombre particulier de bits d'ordre supérieur pour commander la puissance de transmission du PUCCH, et ignorer l'autre du nombre particulier de bits d'ordre inférieur particuliers et du nombre particulier de bits d'ordre supérieur.

3. Terminal (20) selon l'une quelconque des revendications 1 à 2, dans lequel un nombre de bits du nombre particulier de bits d'ordre supérieur est configuré par une signalisation de couche supérieure.

4. Procédé de radiocommunication pour un terminal (20), le procédé comprenant :

recevoir des informations de commande de liaison descendante unique, DCI, pour la transmission répétitive d'un canal de commande ascendant physique, PUCCH ; et

lorsqu'une ou plusieurs informations de relation spatiale sont activées pour une ressource pour la transmission répétitive du PUCCH, commander une puissance de transmission de chacun des PUCCH répétitifs, sur la base d'un nombre particulier de bits d'ordre inférieur pour une commande de commande de puissance de transmission, TPC, correspondant à un premier indice de boucle fermée et un nombre particulier de bits d'ordre supérieur, différent des bits d'ordre inférieur, pour une commande de TPC correspondant à un second indice de boucle fermée qui est inclus dans le DCI, et basée sur au moins un parmi le premier indice de boucle fermée et le second indice de boucle fermée qui correspondent à ladite une ou plusieurs informations de relation spatiale,

dans lequel, lorsque plusieurs informations de relation spatiale sont activées et que la puissance de transmission du PUCCH est commandée sur la base à la fois du premier indice de boucle fermée et du second indice de boucle fermée, un nombre total de bits parmi le nombre particulier de bits d'ordre inférieur et le nombre particulier de bits d'ordre supérieur est deux fois le nombre d'informations de relation spatiale activées.

5. Station (10) de base comprenant :

une section de transmission (120), configurée pour transmettre des informations de commande de liaison descendante unique, DCI, pour la transmission répétitive d'un canal de commande ascendant physique, PUCCH ; et

une section de commande (110), configurée pour, lorsque la section de commande active, pour un terminal (20), une ou plusieurs informations de relation spatiale pour une ressource pour la transmission répétitive de chacun des PUCCH répétitif, commander pour inclure un nombre particulier de bits d'ordre inférieur pour une commande de commande de puissance de transmission, TPC, correspondant à un premier indice de boucle fermée et un nombre particulier de bits d'ordre supérieur, différent des bits d'ordre inférieur, pour une commande de TPC correspondant à un second indice de boucle fermée dans les DCI, de façon à amener le terminal à commander une puissance de transmission du PUCCH,

dans laquelle au moins un parmi le premier indice de boucle fermée et le second indice de boucle fermée correspond à ladite une ou plusieurs informations de relation spatiale,

dans lequel, lorsque plusieurs informations de relation spatiale sont activées et que la puissance de transmission du PUCCH est commandée sur la base à la fois du premier indice de boucle fermée et du second indice de boucle fermée, un nombre total de bits du nombre particulier de bits d'ordre inférieur et du nombre particulier de bits d'ordre supérieur soit deux fois supérieur au nombre d'informations de relation spatiale activées.

6. Système comprenant un terminal (20) selon l'une quelconque des revendications 1 à 3 et une station de base (10) selon la revendication 5.

FIG. 1A

FIRST SRI $l=2$

SECOND SRI $l=1$

TPC COMMAND FIELD

| $n_0$ | $n_1$ | $n_2$ | $n_3$ |
|---|---|---|---|

CORRESPOND TO $l=2$ CORRESPONDING TO FIRST SRI

CORRESPOND TO $l=1$ CORRESPONDING TO SECOND SRI

FIG. 1B

FIRST SRI $l=2$

SECOND SRI $l=1$

TPC COMMAND FIELD

| $n_0$ | $n_1$ | $n_2$ | $n_3$ |
|---|---|---|---|

CORRESPOND TO $l=1$ CORRESPONDING TO SECOND SRI

CORRESPOND TO $l=2$ CORRESPONDING TO SECOND SRI

## FIG. 2A

FIRST SRI ←——→ l=1

SECOND SRI ←——→ l=1

THIRD SRI ←——→ l=2

TPC COMMAND FIELD

| $n_0$ | $n_1$ | $n_2$ | $n_3$ | $n_4$ | $n_5$ |
|---|---|---|---|---|---|

CORRESPOND TO l = 1 CORRESPONDING TO FIRST AND SECOND SRI

CORRESPOND TO l = 2 CORRESPONDING TO THIRD SRI

SET TO 0

## FIG. 2B

FIRST SRI ←——→ l=1

SECOND SRI ←——→ l=1

THIRD SRI ←——→ l=2

TPC COMMAND FIELD

| $n_0$ | $n_1$ | $n_2$ | $n_3$ | $n_4$ | $n_5$ |
|---|---|---|---|---|---|

CORRESPOND TO l = 1 CORRESPONDING TO FIRST AND SECOND SRI

CORRESPOND TO l = 1 (SAME AS $n_0$ AND $n_1$, RESPECTIVELY)

CORRESPOND TO l = 2 CORRESPONDING TO THIRD SRI

## FIG. 3A

TPC COMMAND FIELD

| $n_0$ | $n_1$ | $n_2$ | $n_3$ |
|---|---|---|---|

TCP COMMAND FIELD FOR
CLOSED LOOP INDEX
CORRESPONDING TO SRI

SET TO 0

## FIG. 3B

TPC COMMAND FIELD

| $n_0$ | $n_1$ | $n_2$ | $n_3$ |
|---|---|---|---|

TCP COMMAND FIELD FOR
CLOSED LOOP INDEX
CORRESPONDING TO SRI

SAME AS $n_0$ AND $n_1$,
RESPECTIVELY

FIG. 4

FIG. 5

FIG. 6

10, 20

| 1001 | 1007 | 1004 |
| PROCESSOR | | COMMUNICATION APPARATUS |

| 1002 | | 1005 |
| MEMORY | | INPUT APPARATUS |

| 1003 | | 1006 |
| STORAGE | | OUTPUT APPARATUS |

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010

- **ZTE et al.** Remaining details on NR power control in non-CA aspects. *3GPP DRAFT; R1-1800118*
- 3rd Generation Partnership Project; Technical Specification Group Radio Access Network; NR; Multiplexing and channel coding (Release 16). *3GPPTS 38.212*